# EUROPEAN PATENT APPLICATION

(11) **EP 4 495 650 A1**
(43) Date of publication of application: **22.01.2025**
(21) Application number: 23186702.9
(22) Date of filing: 20.07.2023
(51) Int. Cl.: G02B 6/42

(54) **HYBRID PHOTONIC DEVICE**

(71) Applicant: Scantinel Photonics GmbH, 89077 Ulm (DE); Imec VZW, 3001 Leuven (BE)
(72) Inventor: DAVYDENKO, Vladimir, 76332 Bad Herrenalb (DE); NESIC, Aleksandar, 76297 Stutensee (DE); ALEKSANDRS, Marinins, 2050 Antwerpen (BE); VAN CAMPENHOUT, Joris, 3001 Leuven (BE)
(74) Representative: Ostertag & Partner Patentanwälte mbB

(57) **Abstract**

A hybrid photonic device (10) has a photonic chip (300) comprising a substrate (12) and a multilayer structure (14) that is supported thereon. The multilayer structure (14) comprises patterned layers (200) defining an optical waveguide (210, 220). A recessed trench (310) formed in the multilayer structure (14) disrupts the optical waveguide (210, 220). A micro-optical bench (100) comprising a passive self-alignment structure (18, 22, 20) supports an optical assembly (24) comprising a discrete micro-optical element (400, 410, 420; 451, 452, 453, 454 400a, 400b, 400c) that is secured to the micro-optical bench (100) and aligned by the passive self-alignment structure (18, 22, 20). The micro-optical bench (100) is secured to the multilayer structure (14) upside down such that at least a portion of the optical assembly (24) reaches into the trench (310). The optical assembly (24) receives light (405; 406, 407) emitted by the optical waveguide (210, 220) and/or emits light (405; 406, 407) such that it enters the optical waveguide (210, 220).

## Description

### BACKGROUND OF THE INVENTION

### 1. Field of the Invention

The present invention relates to a hybrid photonic device comprising a photonic integrated circuit (PIC) and a micro-optical bench that supports an assembly of discrete micro-optical elements such as ball lenses, polarizers, or Faraday rotators.

### 2. Description of Related Prior Art

Micro-optical devices for applications such as optical communication or sensors are usually realized either as integrated or as free space optics. Photonic integrated circuits (PIC) have small dimensions, can be manufactured low-cost in lithographic mass production processes, and can be co-integrated with photodiodes and other electronic circuitry. At present, however, certain optical functions, for example optical isolators, cannot be performed by PICs.

Such advanced optical functions are typically the realm of free-space optics. In contrast to integrated optics where many elements can be co-integrated, free-space optics is limited in the number of optical elements due to space and cost restrictions.

One aspect that considerably contributes to the overall costs of free-space optics is the alignment of the micro-optical elements. One approach to avoid active alignments is the use of a micro-optical bench that supports an assembly of optical elements. The micro-optical bench has a plurality of guiding structures for a high-precision passive alignment of the micro-optical elements. Typically, the production of the guiding structures involves micro-machining or high-precision lithographic steps, for example a LIGA process.

An example of such a micro-optical bench is described in scientific publication Li et al. "Four-in-one interferometer for coherent and self-coherent detection", Optics Express, Vol. 21, No. 11, 2013. The micro-optical bench disclosed in this document supports a micro-optical interferometer including polarization beam splitters, prisms, waveplates, and a mirror. The micro-optical bench has self-alignment structures that have been manufactured on a silicon wafer substrate in a LIGA process.

It has also been proposed to combine integrated and free space optics in a single device. For example, scientific publication Happach et al. "On-chip free beam optics on a polymer-based photonic integration platform", Optics Express, Vol. 25, No. 22, 2017, describes a polymer-based platform that includes integrated input and output polymer waveguides. As discrete micro-optical elements, two GRIN lenses and a bulk component such as an etalon are provided. The lenses and the bulk component are placed in precisely fabricated recesses on the polymer board and aligned passively. Each GRIN lens is coupled to the respective polymer waveguide on the polymer board enabling optical coupling of the assembly.

US 8,168,939 B2 proposes to fix a micro-optical bench on a photonic CMOS chip so that a hybrid photonic device is obtained that includes integrated optics as well as free space optics supported on a micro-optical bench. The latter is formed by a micro-machined silicon substrate and supports a semiconductor laser diode, a ball lens, an optical isolator comprising a Faraday rotator, and a turning mirror. The CMOS chip includes various optical, electronic, and optoelectronic components. The light produced by the semiconductor laser is focused by the ball lens, passes the Faraday rotator, and is then reflected by the turning mirror by 90° before it enters the CMOS chip via a grating coupler.

While the combination of integrated and free space optics assembled on a micro-optical bench has turned out to be very promising with a view to functionality and costs, there remain certain deficiencies that have not yet been solved satisfactorily. For example, the hybrid systems are still too bulky because the optical bench completely adds to the overall height of the device. Considerable packaging efforts are thus required to protect the protruding micro-optical bench from mechanical damages. Furthermore, coupling of light from the optical bench to the photonic chip is still an issue and requires additional optical elements such as turning mirrors.

### SUMMARY OF THE INVENTION

It is therefore an object of the present invention to provide a hybrid photonic device that overcomes the above stated problems. More specifically, there is demand for a hybrid photonic device that has small dimensions, is mechanically robust and facilitates coupling of light between optical elements supported by a micro-optical bench on the one hand and optical waveguides integrated in a PIC.

This object is solved, in accordance with the present invention, by a hybrid photonic device with a photonic chip comprising a substrate extending in a substrate plane and a multilayer structure that is supported by the substrate. The multilayer structure comprises patterned layers that extend in planes parallel to the substrate plane and define an optical waveguide. The photonic chip further comprises a recessed trench disrupting the optical waveguide and formed in the multilayer structure, and a micro-optical bench comprising a passive self-alignment structure. The photonic device includes an optical assembly comprising a discrete micro-optical element that is secured to the micro-optical bench and aligned by the passive self-alignment structure. The micro-optical bench is secured to the multilayer structure upside down such that at least a portion of the optical assembly reaches into the trench. The optical assembly is configured to receive light emitted by the optical waveguide, or to emit light such that it enters the optical waveguide.

In accordance with the invention, the micro-optical bench is not only used for alignment, but- since it is mounted upside down - also forms a shield or cover that protects the optical assembly against mechanical impacts from the outside. Since the optical assembly reaches into the trench formed in the photonic chip, the photonic device is compact and has a lower height than prior art devices. The inverted arrangement is also advantageous with a view to the coupling efficiency at the interfaces between integrated optical waveguides and the free space optics supported and aligned by the optical bench. Although grating couplers may be used for this interface, butt coupling (sometimes also referred to as edge coupling) is preferred, as it allows for much higher coupling efficiency and thus lower light losses at the transition between guided and free space light propagation.

The discrete micro-optical element supported and aligned by the micro-optical bench may be a ball lens, a GRIN lens, a polarization beam splitter, a Faraday rotator, a quarter-wave plate or a birefringent wedge, for example. With these elements, complex functional units such as an optical isolator can be realized.

For example, if the optical assembly is an optical isolator, the latter may comprise a polarization beam splitter, a Faraday rotator and a quarter-wave plate. If there is a second polarization beam splitter and both polarization beam splitters are arranged mirror-symmetrically at opposite ends of the optical isolator, an offset of the optical axis caused by only one polarization beam splitter can be avoided.

In an embodiment two such optical isolators are concatenated. Such a two-stage optical isolator has improved isolating characteristics.

In another embodiment, the optical isolator comprises two birefringent wedges. This also avoids an offset of the optical axis introduced by the optical integrator.

The optical waveguide and the trench are preferably defined by a lithographic process. This ensures both the high precision needed for efficient coupling on the one hand and low costs if fabricated in large numbers on the other hand.

If a waveguide facet is formed where the optical waveguide abuts the recessed trench, edge coupling can be achieved that enables lower insertion losses and broadband operation.

Alignment marks may be formed on the multilayer structure for "visually" aligning the micro-optical bench on the multilayer structure in a plane parallel to the substrate plane. Alternatively, passive self-alignment structures may be formed on the multilayer structure or on the micro-optical bench for this purpose. If the passive self-alignment structures are formed on the multilayer structure, they may be rectangular and should be produced by a dry-etching process, because performing wet-etching process steps on the multilayer structure is disadvantageous. Since wet-etching provides more design freedom, it is preferred to have wet-etched passive alignment structures only on the micro-optical bench. Then there will be usually no need to provide additional passive self-alignment structures on the multilayer structure, too.

For aligning the micro-optical bench in a vertical plane that is perpendicular to the substrate plane, the multilayer structure may comprise vertical stops or pedestals. The latter may cooperate with recesses formed in the optical bench and receiving the vertical stops or pedestals.

For securing the micro-optical bench to the multi-layer structure, a glue or solder may be used. The glue or solder may fill an interspace that is formed between the photonic chip and the micro-optical bench so that the light propagates through the glue or solder.

In an embodiment the device comprises a vent channel connecting this interspace with an outside atmosphere. The vent channel prevents the air trapped inside the interspace from damaging the micro-optical elements or the surrounding components if the air expands while being heated.

In another embodiment, the multilayer structure comprises a first optical waveguide and a second optical waveguide. The optical assembly is configured to receive light emitted by the first optical waveguide, to pass the light through the optical assembly, and to emit the light such that it enters the second optical waveguide. Although this arrangement, in which light guided in an optical waveguide is temporarily guided in the free space optical assembly, is likely to be most frequently used, there are other embodiments in which the light is reflected inside the optical assembly so that the latter is connected to only one optical waveguide. In such embodiments the light is reflected inside the optical assembly.

In still other embodiments, the optical assembly distributes the light received from one optical waveguide among two or more optical waveguides. For example, the optical assembly may comprise a polarization beam splitting cube, and the multilayer structure may comprise a first optical waveguide, a second optical waveguide and a third optical waveguide so that light, which is emitted by the first optical waveguide and incident on the polarization beam splitting cube, is, depending on the state of polarization of the light, received either by the second optical waveguide or by the third optical waveguide.

In other embodiments, the multilayer structure comprises a first pair of adjacent optical waveguides and a second pair of adjacent optical waveguides. The optical assembly comprises a 4·nf optical system, with n = 1, 2, ...., and is configured to receive light emitted by the first pair of optical waveguides, to pass the light through the optical assembly, and to emit the light such that it enters the second pair of optical waveguides. Such an arrangement is advantageous because light received from more than one optical waveguide can be "processed" by a single optical assembly.

This concept can also be used without the upside down arrangement in which the optical assembly reaches into a trench. Therefore, according to another aspect of the invention, the above stated object is also solved by a hybrid photonic device with a photonic chip comprising a substrate and a multilayer structure that is supported by the substrate. The multilayer structure comprises patterned layers that extend in planes parallel to a substrate plane and define a first pair of adjacent optical waveguides and a second pair of adjacent optical waveguides. The photonic chip further comprises a micro-optical bench comprising passive self-alignment structures, and an optical assembly comprising a 4·nf optical system, with n = 1, 2, ...., that is secured to the micro-optical bench and aligned by the passive self-alignment structures. The optical assembly is configured to receive light emitted by the first pair of optical waveguides, to pass the light through the optical assembly, and to emit the light such that it enters the second pair of optical waveguides.

### BRIEF DESCRIPTION OF THE DRAWINGS

Various features and advantages of the present invention may be more readily understood with reference to the following detailed description taken in conjunction with the accompanying drawings in which:
- Fig. 1: a side view of a hybrid photonic device according to a first embodiment;
- Fig. 2: a top view on the hybrid photonic device shown in Fig. 1;
- Fig. 3: a top view on the hybrid photonic device according to a variant in which a vent channel is provided;
- Fig. 4: a front view of a hybrid photonic device according to a variant in which the micro-optical bench is vertically aligned by pedestals;
- Fig. 5: is a top view of a hybrid photonic device according to a variant in which the micro-optical bench is aligned parallel to a substrate plane by alignments structures formed on the photonic chip;
- Fig. 6: is a side view of a hybrid photonic device according to a variant in which the micro-optical bench is aligned parallel and perpendicular to the substrate plane by alignments structures formed on the micro-optical bench;
- Fig. 7: is a side view of a hybrid photonic device according to a variant in which the micro-optical bench is secured to the photonic chip by glue;
- Fig. 8: is a top view on a micro-optical bench according to a second embodiment in which the optical assembly has the function of an optical isolator;
- Fig. 9: is a top view of a micro-optical bench as shown in Fig. 8, but with a second polarization beam splitter;
- Fig. 10: is a side view of a hybrid photonic device according to a variant in which a magnet field is produced by magnets supported by the photonic chip;
- Fig. 11: is a top view on the hybrid photonic device shown in Fig. 10;
- Fig. 12: is a side view of a hybrid photonic device according to a variant in which the magnets are supported by the micro-optical bench;
- Fig. 13: is a top view on a micro-optical bench according to an embodiment in which the optical assembly has the function of a two-stage optical isolator;
- Fig. 14: is a side view of a hybrid photonic device according to an embodiment in which the optical assembly includes a 8f optical system;
- Fig. 15: is a top view on a hybrid photonic device according to an embodiment in which the optical assembly includes a 4f optical system that connects two pairs of adjacent optical waveguides;
- Fig. 16: is a top view on a hybrid photonic device according to an embodiment in which the optical assembly comprises a beam splitter cube that distributes light among two optical waveguides depending in a polarization dependent manner; and
- Fig. 17: is a top view on a micro-optical bench according to an embodiment in which the optical assembly is an optical isolator including two birefringent wedges.

### DESCRIPTION OF PREFERRED EMBODIMENTS

### 1. First embodiment

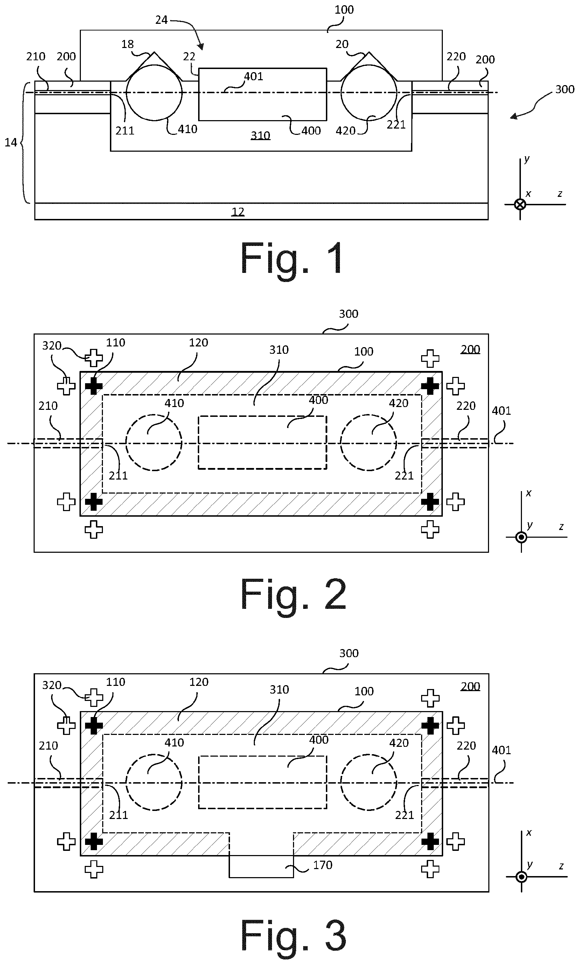

Fig. 1 illustrates a side view of a hybrid photonic device 10 in accordance with a first embodiment of the invention. One component of the device 10 is a photonic chip 300 that comprises a silicon substrate 12 and a multilayer structure 14 supported by the substrate 12. The multilayer structure 14 comprises a plurality of layers - at least some of them are patterned - extending in planes parallel to a substrate plane. Two upper layers are shown in Fig. 1 that define two optical waveguide portions. Each portion comprises a waveguide core 210, 220 having a refractive index n_{c} and a surrounding surface layer 200 having a refractive index nₛ with n_{c} > nₛ. In the embodiment shown, the waveguide cores 210, 220 consist of silicon nitride (SiN) and the surface layer 200 of SiO₂. However, other material combinations are envisaged, too.

While the two upper layers 210/220 and 200 have a photonic function, other layers of the multilayer structure 14, for example the layers immediately above the substrate 12, may have a purely electrical function. These lower layers may form, for example, electrical conductors, insulators or semiconductor elements required for diodes or transistors. Since this configuration of a photonic chip 300 is known in the art as such, it will not be explained in further detail.

For the sake of simplicity, the waveguide core 210, 220 will be referred to in the following simply as "optical waveguide", although the surrounding surface layer 200 also contributes to the waveguiding effect due to total internal reflection.

The multilayer structure 14 has a recessed trench 310 that was produced by a deep-etching process step. In the embodiment shown, the trench 310 has an elongated shape, with the long dimension extending parallel to the longitudinal direction of the optical waveguides 210, 220. The deep trench 310 disrupts the optical waveguides 210, 220 so that waveguide facets 211, 221 are formed where the optical waveguides 210, 220 abut the trench 310.

The device 10 further comprises a silicon micro-optical bench 100 on which a plurality of passive and high-precision self-alignment structures 18, 20, 22 are formed. The self-alignment structures 18, 20, 22 receive and align optical elements of an optical assembly 24, here two ball lenses 410, 420 and a bulk micro-optical component 400 arranged in an optical path between the two ball lenses 410, 420. For obtaining the desired self-alignment effect, the selfalignments structures 18, 20 aligning the ball lenses 410, 420 are formed as pyramidal recesses (or V-grooves, not shown) that are anisotropically etched or micro-machined into the silicon micro-optical bench 301. The self-alignment structure 22 aligning the bulk micro-optical component 400 is a recess having a cuboidel shape that corresponds to the shape of the bulk micro-optical component 400. The optical elements are secured to the optical bench 100 by glue or solder.

As can be seen in Fig. 1, the micro-optical bench 100 is secured to the multilayer structure 14 of the photonic chip 300 upside down so that at least a portion of the optical assembly 24 reaches into the trench 310. The dimensions of these components are selected in such a way that the optical axis 401 of the ball lens 410 is located below the upper surface of the photonic chip 300 at a vertical position that is accurately aligned with the longitudinal axis 401 of the left optical waveguide 210. Due to these matching vertical positions, light emitted from the waveguide facet 211, for example, will be collected and collimated by the ball lens 410 very efficiently so that a collimated light beam enters the bulk micro-optical component 400. Collimated light emerging at the opposite side of the bulk micro-optical component 400 will enter the right ball lens 420 and be focused on the waveguide facet 221 of the right optical waveguide 220. In this way the light can enter the optical waveguide 220 with very low optical losses.

The low-loss coupling is mainly a result of the precise alignment, to which the self-alignment structures 18, 20, 22 contribute, and the very efficient waveguide facet coupling. In other embodiments, grating couplers may be used, but these will entail higher optical losses.

Fig 2. is a top view on the photonic chip 300 before the micro-optical bench 100 is secured. The hatched area indicates the contact area at which the micro-optical bench 100 will contact the surface layer 200 of the photonic chip 300. Alignment marks 320 re formed on the surface layer 200 of the multilayer structure 14 for passively aligning the micro-optical bench 100 on the multilayer structure 14 in a plane parallel to the substrate plane (xz plane). The alignment marks 320 formed on the photonic chip 300 correspond to alignment marks 110 that are formed on the micro-optical bench 100.

### 2. Alternative embodiments

In alternative embodiments, the ball lenses 410, 420 are replaced by GRIN lenses.

In the embodiment shown in Fig. 3 the micro-optical bench 100 does not fully seal the trench 310 etched in the photonic chip 300. Instead, the trench 310 has a laterally protruding portion that forms, together with the micro-optical bench 100, a vent channel 170. The latter connects the interspace, which is formed by the part of the trench 310 between the photonic chip 300 and the micro-optical bench 310, with an outside atmosphere. The vent channel 170 is advantageous, for example, if the optical assembly 24 secured to the micro-optical bench 100 is exposed to high temperatures in subsequent processing steps. If the interspace was hermetically sealed by the micro-optical bench 100, air trapped inside the interspace would expand and may damage the micro-optical elements of the optical assembly 24 or even lead to cracks in the surrounding components.

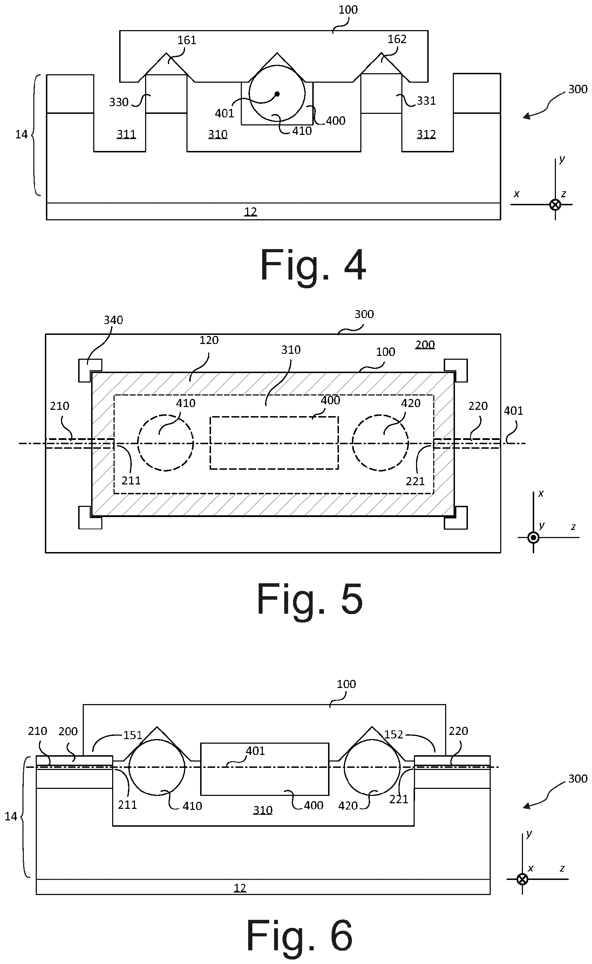

Fig. 4 is a front view perpendicular to xy-plane of an embodiment in which the micro-optical bench 100 is suspended on pedestals 330, 340 formed on top of the photonic chip 300. The pedestals 330, 340 have been patterned by deep-etching grooves 310, 311, 312 into the multilayer structure 14 of the photonic chip 300. Horizontal and vertical self-alignment of the micro-optical bench 100 is achieved by the cooperation of the pedestals 330, 340 with V-grooves 161, 162 that have been precisely etched into the micro-optical bench 100. The latter can be secured to the photonic chip 300 by filling the grooves 311, 312 and/or the grooves 161, 162 with a UV-curable glue, for example.

Fig 5. depicts, in a top view similar to Fig. 2, an alternative embodiment in which protruding self-alignment structures 340 have been formed, e.g. by 3D-printing, on the surface layer 200 of the photonic chip 300. The self-alignment structures 340 align the micro-optical bench 100 horizontally (i.e. in a plane parallel to the substrate plane) on the upper surface layer 200 of the photonic chip 300.

Fig 6. depicts, in a side view similar to Fig. 1, an alternative embodiment in which recessed self-alignment structures 151, 152 are formed in the micro-optical bench 100. The self-alignment structures 151, 152 align the micro-optical bench 100 horizontally and also vertically (i.e. parallel and perpendicular to the substrate plane) on the upper surface layer 200 of the photonic chip 300.

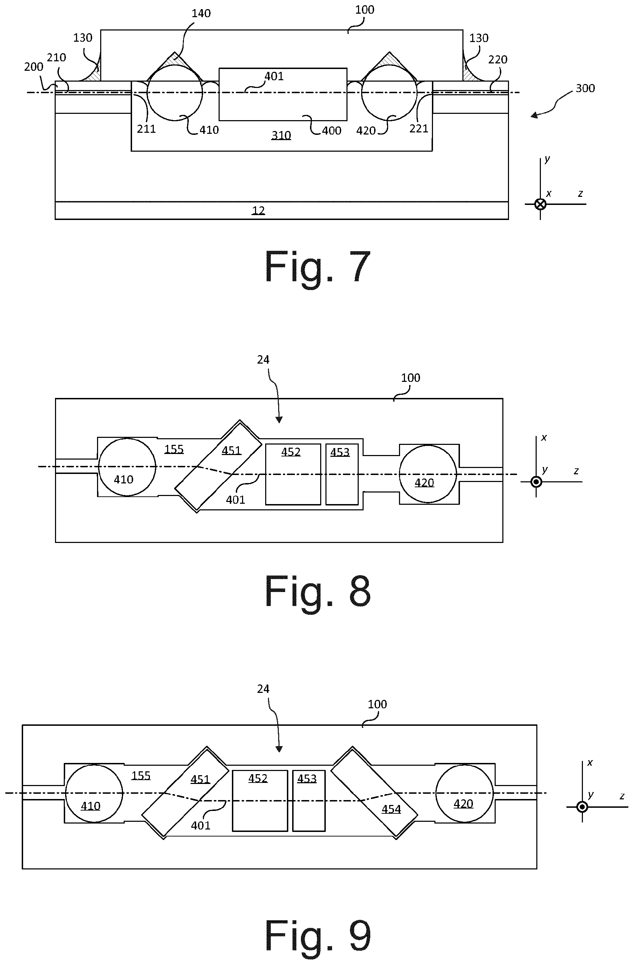

Fig 7. depicts, in a side view similar to Fig. 1, an alternative embodiment in which glue 130 is used for mechanically securing the micro-optical bench 100 to the photonic chip 300, and glue 140 is used for mechanically securing the optical elements of the optical assembly 24 (i.e. the ball lenses 410, 420 and the bulk micro-optical component 400) to the micro-optical bench 100.

### 3. Optical isolator

Fig. 8 is a top view on a micro-optical bench 100 according to a second embodiment. In this embodiment, the optical assembly 24 aligned by the micro-optical bench 100 comprises two ball lenses 410, 420 and an optical isolator. The latter comprises a polarization beam splitter 451, a non-magnetic (i.e. not requiring an external magnetic field) Faraday rotator 452, and a quarter-wave plate 453. All optical elements are placed in a common trench 155 having a shape and dimensions that are adapted to the size and geometry of the aforementioned optical elements. The optical isolator can, for example, enable a propagation of TE polarized light only along the positive z direction, while TE polarized light in the opposite direction is blocked.

Fig. 9 depicts, in a to view similar to Fig. 8, an alternative embodiment of an optical isolator. In this embodiment the optical assembly 24 comprises additionally a second polarization beam splitter 454 that is added at the output between the half-wave plate 453 and the ball lens 420. The second polarization beam splitter 545 suppresses propagation of TM modes backwards along the negative z direction and compensates for the x direction offset of the optical axis 401 caused by the other polarization beam splitter 451.

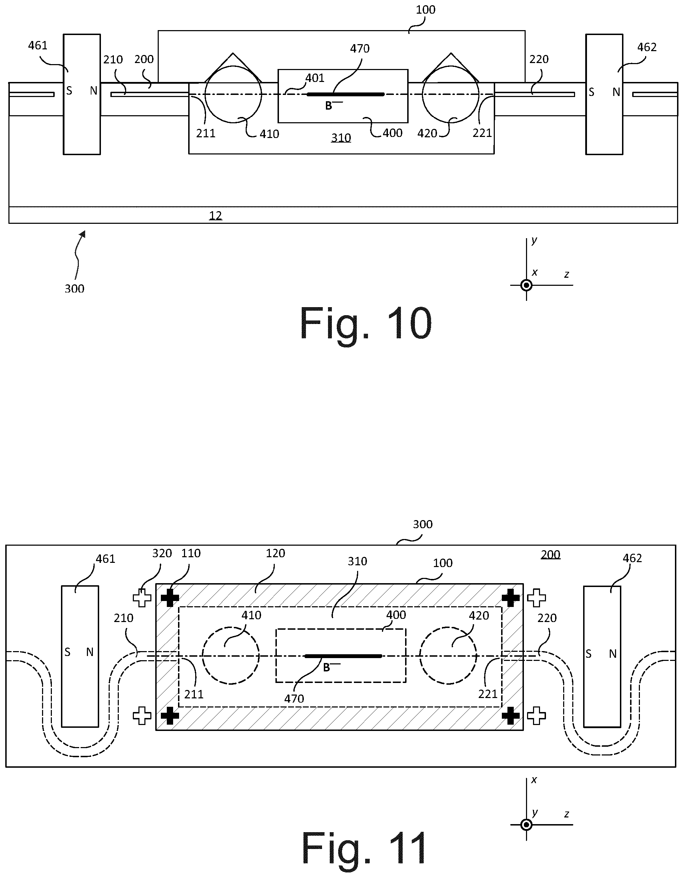

Figs. 10 and 11 depict, in side and top views similar to Figs. 1 and 2, respectively, an embodiment in which the bulk micro-optical component 400 is an optical isolator that is placed in an external magnetic field. The bulk micro-optical component 400 includes at least one Faraday rotator that requires an external magnetic field 470. The latter is produced by magnets 461, 462 that are placed and fixed in etched grooves on the photonic chip 300.

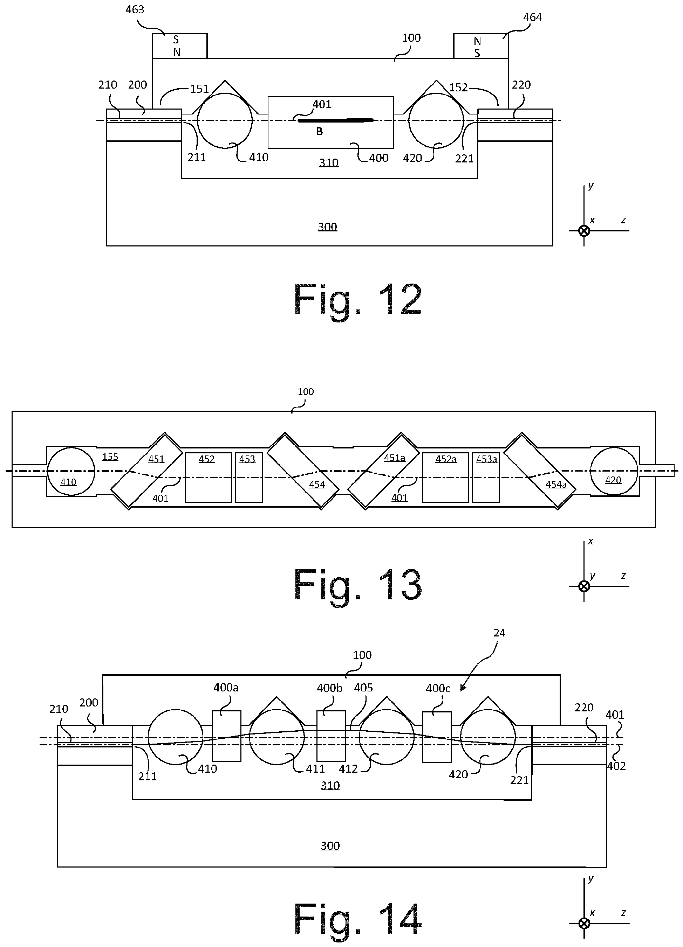

In the alternative embodiment shown in Fig. 12, magnets 463 and 464 are placed on the bottom side of the micro-optical bench 100.

Fig. 13 depicts, in a top view similar to Fig. 9, an optical assembly forming a two-stage optical isolator that comprises two concatenated optical isolators as shown in Fig. 9. The first optical isolator comprises a polarization beam splitter 451, a non-magnetic Faraday rotator 452, a quarter-wave plate 453, and another polarization beam splitter 454. The second optical isolator comprises a polarization beam splitter 451a, a non-magnetic Faraday rotator 452a, a quarter-wave plate 453a, and another polarization beam splitter 454a. The polarization beam splitters 451, 454, 451a and 454a are arranged such as to compensate for the x-offset of the optical axis 401.

### 4. Multiple coupling points

Fig. 14 depicts, in a side view similar to Fig. 1, an embodiment in which the optical assembly 24 forms an 8f optical system consisting of two concatenated 4f optical systems. A first 4f optical system comprises two first ball lenses 410, 411, and a second 4f optical system comprises two second ball lenses 412, 420. Within the 8f optical system, various additional optical assemblies or components 400a, 400b, 400c are placed that may perform various functions.

The 8f optical system compensates for the vertical (y direction) offset of the optical axis 401 of the micro-optical assembly with respect to the optical axis 402 of the waveguide portions 210 and 220. In Fig. 14 an exemplary light ray 405 is shown that emerges from the waveguide facet 211 of the optical waveguide 210, propagates along the optical axis 402 and parallel to optical axis 401, but below the latter with a vertical offset. The light ray 405 arrives at the first 4f optical system and is refracted at the front and the back surfaces of the first ball lenses 410, 411. After passing the ball lens 411, the light ray 405 is parallel to optical axis 401 and above it with a vertical offset that is equal to the vertical offset between the optical axes 401, 402. The light ray then arrives at the second 4f optical system and is refracted at the front and the back surfaces of the second ball lenses 412, 420. After passing through the lens 420, the light ray 405 is again parallel to the optical axis 401 and aligned with the optical axis 402.

Using a 4·nf optical system, with n = 1, 2, ...., is advantageous because it reproduces, apart from an image reversal occurring for n =1, 3, 5, ...., the angular distribution of light, which is emitted at one end, at the opposite end of the optical system. This makes is possible to provide multiple coupling points.

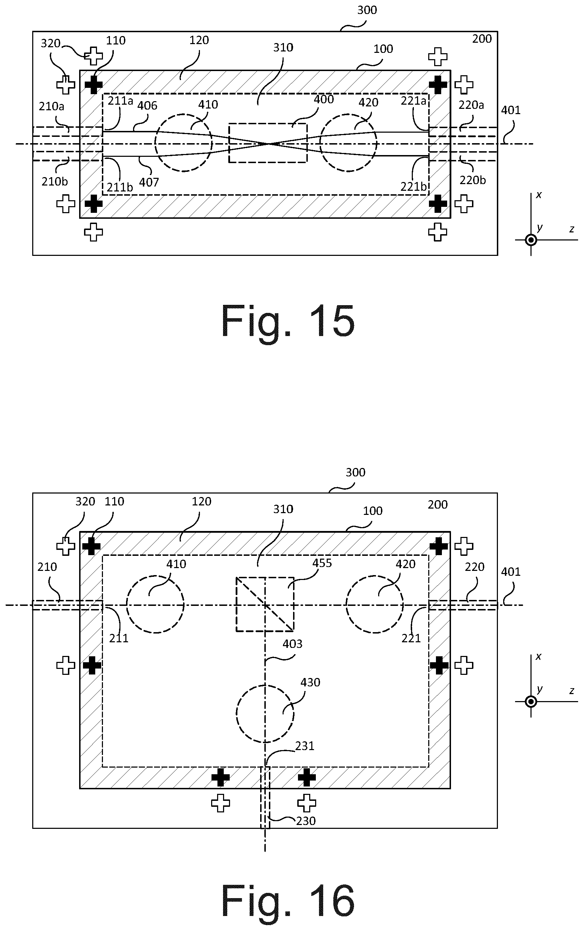

This will be explained below with reference to Fig. 15 that depicts, in a top view similar to Fig. 2, the photonic chip 300 before the micro-optical bench 100 is secured. The optical assembly includes a 4f optical system comprising two ball lenses 410, 420 and a bulk optical component 400 arranged in between. The 4f optical system enables a simultaneous optical coupling between two pairs of optical waveguides, namely a first pair of adjacent optical waveguides 210a, 210b to a second pair of adjacent optical waveguides 220a, 220b on the opposite side. Light emerging from the optical waveguide 210a passes as collimated beam through the bulk optical component 400 and is coupled into the optical waveguide 220b. Similarly, light emerging from the optical waveguide 210b passes as collimated beam through the bulk optical component 400 and is coupled into the optical waveguide 220a.

This configuration makes it possible to simultaneously use one optical bulk optical component 400, for example an optical isolator, for a plurality of optical waveguides.

In the embodiment shown in Fig. 15 light couples diagonally between the opposing pairs of optical waveguides 210a, 210b and 220a, 220b. If this is undesirable, an 8f optical system may be used.

Fig. 16 shows, in a top view similar to Fig. 15, an embodiment with three coupling points. The optical assembly 24 comprises three ball lenses 410, 420, 430 and a polarization beam splitter cube 455. In alternative embodiments, additional bulk optical components are arranged in the light path between the ball lenses 410, 420, 430.

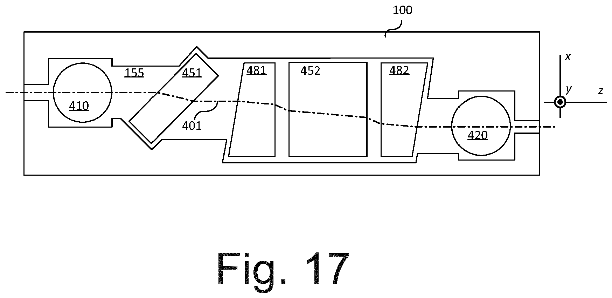

Fig. 17 depicts, in a top view similar to Fig. 8, an embodiment in which the optical assembly 24 supported by the micro-optical bench 100 comprises two ball lenses 410, 420 and an optical isolator. The latter comprises a polarization beam splitter 451, a non-magnetic Faraday rotator 452 and two birefringent wedges 481 and 482. The optic axis of the birefringent wedge 482 is rotated by 45° with respect to the optic axis of the birefringent wedge 481. All optical elements are placed in a common trench 155 that is shaped and dimensioned so as to match the size and geometry of the aforementioned optical elements.

This optical assembly 24 allows for propagation of TE polarized light only along the positive z direction. In the opposite direction, TE and TM polarized light would be offset from the optical axis 401, and TM polarized light would be additionally deflected by the polarization beam splitter 451.

In an alternative embodiment (not shown), the polarization beam splitter 451 is omitted. Then the optic assembly 24 allows for propagation of TE and TM polarized light only along the positive z direction. In the opposite direction, both polarizations would be offset from the optical axis 401. These offsets prevent coupling into the optical waveguide that is integrated into the photonic chip (not shown in Fig. 17) and aligned to the optical axis 401 at the side of the ball lens 410.

## Claims

1. A hybrid photonic device (10), comprising:
a photonic chip (300) comprising
a substrate (12) extending in a substrate plane,
a multilayer structure (14) that is supported by the substrate (12) and comprises patterned layers (200) that extend in planes parallel to the substrate plane and define an optical waveguide (210, 220), and
a recessed trench (310) disrupting the optical waveguide (210, 220) and formed in the multilayer structure (14),
a micro-optical bench (100) comprising a passive self-alignment structure (18, 22, 20); and
an optical assembly (24) comprising a discrete micro-optical element (400, 410, 420; 451, 452, 453, 454 400a, 400b, 400c) that is secured to the micro-optical bench (100) and aligned by the passive self-alignment structure (18, 22, 20);
wherein
the micro-optical bench (100) is secured to the multilayer structure (14) upside down such that at least a portion of the optical assembly (24) reaches into the trench (310), and wherein
the optical assembly (24) is configured
to receive light (405; 406, 407) emitted by the optical waveguide (210, 220), or
to emit light (405; 406, 407) such that it enters the optical waveguide (210, 220).

2. The hybrid photonic device of claim 1, wherein the discrete micro-optical element is one of the group consisting of: a ball lens (410, 420), a GRIN lens, a polarization beam splitter (451, 454; 451a, 454a), a Faraday rotator (452; 452a), a quarter-wave plate (453; 453a) and a birefringent wedge (481, 482).

3. The hybrid photonic device of any of claims 1 or 2, wherein the optical assembly comprises an optical isolator.

4. The hybrid photonic device of claim 3, wherein the optical isolator comprises a polarization beam splitter (451; 451a), a Faraday rotator (452; 452a) and a quarter-wave plate (453; 453a).

5. The hybrid photonic device of claim 4, wherein the optical isolator comprises a further polarization beam splitter (454; 454a), and wherein both polarization beam splitters (451, 454; 451a, 454a) are arranged mirror-symmetrically at opposite ends of the optical isolator.

6. The hybrid photonic device of any of claims 3 to 5, wherein the optical assembly comprises two concatenated optical isolators.

7. The hybrid photonic device of any of claims 3 to 6, wherein the optical isolator comprises two birefringent wedges (481, 482).

8. The hybrid photonic device of any of the preceding claims, wherein the optical waveguide (210, 220) and the trench (310) is defined by a lithographic process.

9. The hybrid photonic device of any of the preceding claims, comprising a waveguide facet (211) that is formed where the optical waveguide (210, 220) abuts the trench (310).

10. The hybrid photonic device of any of the preceding claims, wherein alignment marks (320) are formed on the multilayer structure (14) for aligning the micro-optical bench (100) on the multilayer structure (14) in a plane parallel to the substrate plane.

11. The hybrid photonic device of any of the preceding claims, wherein further passive self-alignment structures (151, 152; 161, 162; 330, 331; 340) are formed on the multilayer structure (14) and/or on the micro-optical bench (100) for aligning the micro-optical bench (100) on the multilayer structure (14) in a plane parallel to the substrate plane.

12. The hybrid photonic device of claim 11, wherein the further self-alignment structure comprises vertical stops or pedestals (330, 331) formed in the multilayer structure (14) for aligning the micro-optical bench (100) in a vertical plane that is perpendicular to the substrate plane.

13. The hybrid photonic device of any of the preceding claims, comprising a glue (130) or solder that secures the micro-optical bench (100) to the multi-layer structure (14).

14. The hybrid photonic device of claim 7, wherein the glue or solder fills an interspace that is formed between the photonic chip (300) and the micro-optical bench (100).

15. The hybrid photonic device of any of the preceding claims, comprising a vent channel (170) connecting an interspace, which is formed between the photonic chip (300) and the micro-optical bench (100), with an outside atmosphere.

16. The hybrid photonic device of any of the preceding claims, wherein the multilayer structure (14) comprises a first optical waveguide (210) and a second optical waveguide (220), and wherein the optical assembly (24) is configured to receive light emitted by the first optical waveguide (210), to pass the light through the optical assembly (24), and to emit the light such that it enters the second optical waveguide (220).

17. The hybrid photonic device of any of the preceding claims, wherein the multilayer structure (24) comprises a first pair of adjacent optical waveguides (210a, 210b) and a second pair of adjacent optical waveguides (220a, 220b), and wherein the optical assembly (24) comprises a 4·nf optical system, with n = 1, 2, ...., and is configured to receive light emitted by the first pair of optical waveguides (210a, 210b), to pass the light through the optical assembly (24), and to emit the light such that it enters the second pair of optical waveguides (220a, 220b).

18. The hybrid photonic device of any of the preceding claims, wherein the optical assembly (24) comprises a polarization beam splitting cube (455), and wherein the multilayer structure (24) comprises a first optical waveguide (210), a second optical waveguide (220) and a third optical waveguide (230) so that light, which is emitted by the first optical waveguide (210) and incident on the polarization beam splitting cube (455), is, depending on the state of polarization of the light, received either by the second optical waveguide (220) or by the third optical waveguide (230).
